# EUROPEAN PATENT SPECIFICATION

(11) **EP 1 646 951 B1**
(45) Date of publication and mention of the grant of the patent: **03.09.2008**
(21) Application number: 04755791.3
(22) Date of filing: 18.06.2004
(51) Int. Cl.: G06F 13/38, G06F 3/06, G06F 11/20

(54) **INTERMEDIATE STATION PACKET FORWARDING CHECK**
ZWISCHENSTATIONS-PAKET-WEITERLEITUNGSPRÜFUNG
POSTE INTERMEDIAIRE POUR LE CONTROLE DE L'EXPEDITION DE PAQUETS

(30) Priority: 30.06.2003 US 611163
(43) Date of publication of application: 19.04.2006
(73) Proprietor: Intel Corporation, Santa Clara, CA 95052 (US)
(72) Inventor: CLAYTON, Michele, Scottsdale, AZ 85259 (US); BROWN, Mark, Gilbert, AZ 85296 (US); SKERRY, Brian, Gilbert, AZ 85233 (US); CORRADO, Francis, Newton, MA 02460 (US); WOOTTEN, Jonathan, Queen Creekl, AZ 85242 (US)
(74) Representative: Dunlop, Hugh Christopher
(86) International application number: PCT/US2004/019872
(87) International publication number: WO 2005/006178

(56) References cited:
- WO-A-99/26150
- KNOWLES M: "Survey of the storage evolution" USER GROUP CONFERENCE, 2003. PROCEEDINGS JUNE 9-13, 2003, PISCATAWAY, NJ, USA,IEEE, 9 June 2003 (2003-06-09), pages 362-367, XP010674984 ISBN: 0-7695-1953-9
- ANONYMOUS: "Method for physical virtualization of an array of serial hard disk drive storage devices" IP.COM JOURNAL, IP.COM INC., WEST HENRIETTA, NY, US, 20 September 2002 (2002-09-20), XP013004710 ISSN: 1533-0001

## Description

### FIELD

This disclosure relates to an intermediate station.

### BACKGROUND

In one conventional data storage arrangement, a computer node includes a host processor and a host bus adapter (HBA). The HBA includes ports via which the HBA communicates with data storage devices via respective point-to-point communication links coupled to the ports. In this conventional arrangement, an expander may be used to increase the number of data storage devices with which and/or the number of communication links via which, the HBA may communicate. The expander may permit one-to-many communication between one of the ports of the HBA and a plurality of data storage devices and/or communication links. "Survey of the storage evolution", Knowles, discusses such a data storage arrangement.

In this conventional arrangement, the data storage devices comprise a redundant array of independent disks (RAID). The host processor and/or HBA perform RAID-related operations (e.g., operations involved in maintaining and/or implementing the RAID). Unfortunately, this may use undesirably large amounts host processor and/or HBA processing resources to carry out such operations.

WO99/26150 discusses a high-performance RAID system for a PC comprising a controller card which controls an array of ATA disk drives. The present invention provides a system as set out in claim 1 and a method as set out in claim 9.

### BRIEF DESCRIPTION OF THE DRAWINGS

Features aud advantages of embodiments of the claimed subject matter will become apparent as the following Detailed Description proceeds, and upon reference to the Drawings, wherein like numnerals depict like parts, and in which:

Figure 1 is diagram that illustrates a system embodiment.

Figure 2 is a flowchart that illustrates operations that may be performed according to an embodiment.

Although the following Detailed Description will proceed with reference being made to illustrative embodiments of the claimed subject matter, many alternatives, modifications, and variations thereof will be apparent to those skilled in the art. Accordingly, it is intended that the claimed subject matter be viewed broadly, and be defined only as set forth in the accompanying claims.

### DETAILED DESCRIPTION

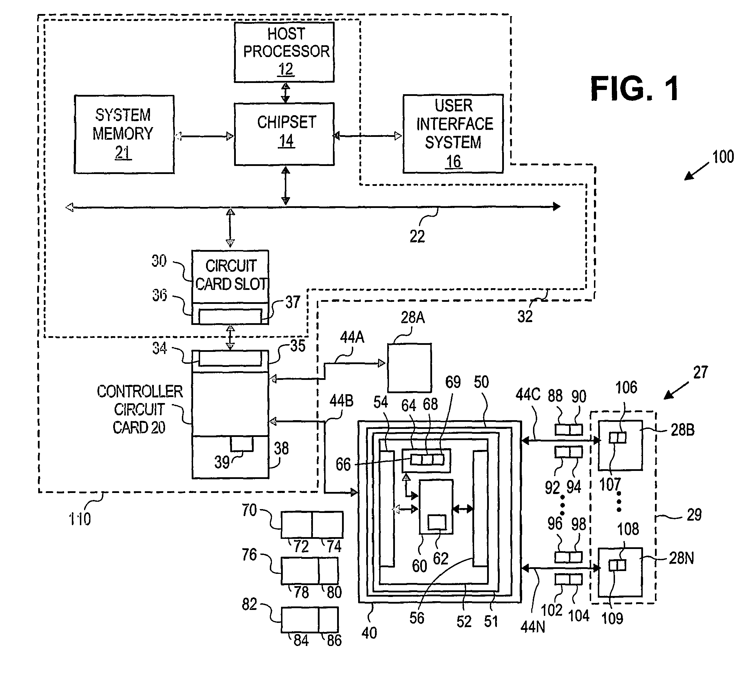

Figure 1 illustrates a system embodiment 100. System 100 may include a host processor 12 coupled to a chipset 14. Host processor 12 may comprise, for example, an Intel^{®} Pentium^{®} IV microprocessor that is commercially available from the Assignee of the subject application. Of course, alternatively, host processor 12 may comprise another type of microprocessor, such as, for example, a microprocessor that is manufactured and/or commercially available from a source other than the Assignee of the subject application, without departing from this embodiment.

Chipset 14 may comprise a host bridge/hub system that may couple host processor 12, a system memory 21 and a user interface system 16 to each other and to a bus system 22. Chipset 14 may also include an input/output (I/O) bridge/hub system (not shown) that may couple the host bridge/bus system to bus 22. Chipset 14 may comprise one or more integrated circuit chips, such as those selected from integrated circuit chipsets commercially available from the assignee of the subject application (e.g., graphics memory and I/O controller hub chipsets), although one or more other integrated circuit chips may also, or alternatively be used, without departing from this embodiment. User interface system 16 may comprise, e.g., a keyboard, pointing device, and display system that may permit a human user to input commands to, and monitor the operation of, system 100.

Bus 22 may comprise a bus that complies with the Peripheral Component Interconnect (PCI) Express^{™} Base Specification Revision 1.0, published July 22, 2002, available from the PCI Special Interest Group, Portland, Oregon, U.S.A. (hereinafter referred to as a "PCI Express^{™} bus"). Alternatively, bus 22 instead may comprise a bus that complies with the PCI-X Specification Rev. 1.0a, July 24, 2000, available from the aforesaid PCI Special Interest Group, Portland, Oregon, U.S.A. (hereinafter referred to as a "PCI-X bus"). Also alternatively, bus 22 may comprise other types and configurations of bus systems, without departing from this embodiment.

System embodiment 100 may comprise storage devices 28A and 27. Storage devices 28A may comprise one or more mass storage devices communicatively coupled to an I/O controller circuit card 20 via one or more communication media 44A. As used herein, a "storage device" means an apparatus or medium into, and from which, data and/or commands may be stored and retrieved, respectively. Also as used herein, a "mass storage device" means a storage device that is capable of non-volatile storage of data and/or commands, and, for example, may include, without limitation, magnetic, optical, and/or semiconductor storage devices. In this embodiment, card 20 may comprise, for example, an HBA. Storage devices 27 may comprise a plurality of storage devices 28B ... 28N that may be communicatively coupled to an intermediate station 40 via one or more respective communication media 44C ... 44N. Each of the storage devices 28B ... 28N may comprise a respective mass storage device. Intermediate station 40 may be communicatively coupled to card 20 via one or more communication media 44B. Of course, the number of storage devices 28A and 27, and the number of communication media 44A, 44B, 44C ... 44N may vary without departing from this embodiment.

As used herein, a "communication medium" means a physical entity through which electromagnetic radiation may be transmitted and/or received. Also as used herein, an "intermediate station" means a first node in a network that is capable of forwarding, in response at least in part to receipt by the first node of one or more packets from a second node in the network, one or more other packets to a third node in the network. Also as used herein, a "packet" means a sequence of one or more signals that encode one or more symbols and/or values. As used herein, "forwarding" one or more packets by, from, or via a first device means transmitting by, from, or via, respectively, the first device the one or more packets to a second device.

In this embodiment, storage devices 27 may comprise one or more redundant arrays of independent disks (RAID) 29 that may be implemented using mass storage devices 28B .. 28N. The RAID level that may be implemented by RAID 29 may be 0, 1, or greater than 1. Depending upon, for example, the RAID level implemented in RAID 29, the number of mass storage devices 28B ... 28N comprised in RAID 29 may vary so as to permit the number of mass storage devices 28A ... 28N to be at least sufficient to implement the RAID level implemented in RAID 29.

Processor 12, system memory 21, chipset 14, bus 22, and circuit card slot 30 may be comprised in a single circuit board, such as, for example, a system motherboard 32. A host computer system 110 may comprise system motherboard 32.

In this embodiment, card 20 may exchange data and/or commands with one or more mass storage devices 28A and intermediate station 40, via one or more media 44A and one or more media 44B, respectively, using, e.g., Serial Advanced Technology Attachment (S-ATA) protocol and/or Serial Attached Small Computer Systems Interface (SAS) protocol. Of course, alternatively, I/O controller card 20 may exchange data and/or commands with one or more mass storage devices 28A and intermediate station 40 using other and/or additional communication protocols, without departing from this embodiment.

In this embodiment, intermediate station 40 may exchange data and/or commands with storage devices 27, via communication media 44C ... 44N, using, e.g. an S-ATA and/or SAS protocol. Of course, alternatively, station 40 may exchange data and/or commands with devices 27 using other and/or additional communication protocols, without departing from this embodiment.

In accordance with this embodiment, if an S-ATA protocol is used by controller card 20 to exchange data and/or commands with one or more mass storage devices 28A and intermediate station 40, and/or if an S-ATA protocol is used by intermediate station 40 to exchange data and/or commands with mass storage devices 27, the S-ATA protocol may comply or be compatible with the protocol described in "Serial ATA: High Speed Serialized AT Attachment," Revision 1.0, published on August 29, 2001 by the Serial ATA Working Group. If an SAS protocol is used by controller card 20 to exchange data and/or commands with one or more mass storage devices 28A and intermediate station 40, and/or if an SAS protocol is used by intermediate station 40 to exchange data and/or commands with mass storage devices 27, the SAS protocol may comply or be compatible with the protocol described in "Information Technology - Serial Attached SCSI (SAS)," Working Draft American National Standard of International Committee For Information Technology Standards (INCITS) T10 Technical Committee, Project T10/1562-D, Revision 2b, published 19 October 2002, by American National Standards Institute (hereinafter termed the "SAS Standard") and/or later-published versions of the SAS Standard.

Depending upon, for example, whether bus 22 comprises a PCI Express^{™} bus or a PCI-X bus, circuit card slot 30 may comprise, for example, a PCI Express^{™} or PCI-X bus compatible or compliant expansion slot or interface 36. Interface 36 may comprise a bus connector 37 may be electrically and mechanically mated with a mating bus connector 34 that may be comprised in a bus expansion slot or interface 35 in circuit card 20.

As used herein, "circuitry" may comprise, for example, singly or in any combination, hardwired circuitry, programmable circuitry, state machine circuitry, and/or memory that may comprise program instructions that may be executed by programmable circuitry. In this embodiment, circuit card 20 may comprise operative circuitry 38 which may comprise computer-readable memory 39. Memory 39 may comprise one or more of the following types of memories: semiconductor firmware memory, programmable memory, non-volatile memory, read only memory, electrically programmable memory, random access memory, flash memory, magnetic disk memory, and/or optical disk memory. Either additionally or alternatively, memory 39 may comprise other and/or later-developed types of computer-readable memory.

Machine-readable firmware program instructions may be stored in memory 39. These instructions may be accessed and executed by operative circuitry 38. When executed by circuitry 38, these instructions may result in card 20 and/or circuitry 38 performing the operations described herein as being performed by card 20 and/or circuitry 38.

Slot 30 and card 20 are constructed to permit card 20 to be inserted into slot 30. When card 20 is properly inserted into slot 30, connectors 34 and 36 become electrically and mechanically coupled to each other. When connectors 34 and 36 are so coupled to each other, card 20 becomes electrically coupled to bus 22 and may exchange data and/or commands with system memory 21, host processor 12, and/or user interface system 16 via bus 22 and chipset 14.

Alternatively, without departing from this embodiment, operative circuitry 38 may not be comprised in card 20, but instead, may be comprised in other structures, systems, and/or devices. These other structures, systems, and/or devices may be, for example, comprised in motherboard 32, coupled to bus 22, and exchange data and/or commands with other components (such as, for example, system memory 21, host processor 12, and/or user interface system 16) in system 100.

In this embodiment, intermediate station 40 may comprise a standalone node coupled to, and geographically displaced from, at least in part, host system 110 and RAID 29. In this embodiment, station 40 may comprise operative circuitry 50 that may comprise, for example, packet forwarding mechanism 51. In this embodiment, mechanism 51 may comprise, for example, an expander 52 that, in this embodiment, unless stated to the contrary herein, may comply and/or be compatible with the definition of, and perform operations performed by a SAS expander, for example, as provided in the SAS Standard. Expander 52 may comprise one or more I/O ports 54, one or more I/O ports 56, forwarding/routing circuitry 60, and computer-readable memory 64. Memory 64 may comprise one or more of the following types of memories: semiconductor firmware memory, programmable memory, non-volatile memory, read only memory, electrically programmable memory, random access memory, flash memory, magnetic disk memory, and/or optical disk memory. Either additionally or alternatively, memory 64 may comprise other and/or later-developed types of computer-readable memory. One or more I/O ports 54 may be coupled via one or more media 44B to card 20. One or more I/O ports 56 may comprise a plurality of I/O ports that may be respectively coupled via media 44C ... 44N to devices 28B ... 28N. Circuitry 60 may be coupled to one or more ports 54, memory 64, and ports 56.

Alternatively, without departing from this embodiment, operative circuitry 50 may not be comprised in a standalone intermediate station that is geographically displaced, at least in part, from host system 110, but instead, may be comprised in other structures, systems, and/or devices that may be, for example, comprised in motherboard 32 and coupled to bus 22, and exchange data and/or commands with other components (such as, for example, system memory 21, host processor 12, and/or user interface system 16) in system 110. Further alternatively, without departing from this embodiment, these other structures, systems, and/or devices may be, for example, comprised in another circuit card (not shown) that may coupled to bus 22 via another circuit card slot (not shown) that may be comprised in host system 110.

Memory 64 may store, for example, machine executable program instructions 66 and packet forwarding and/or routing tables 69. Tables 69 may comprise forwarding information 68. As used herein, "forwarding information" means data and/or one or more parameters based upon which, at least in part, a determination or selection of one or more devices via which to forward one or more packets may be made, as least in part. Instructions 66, and/or portions thereof, may be retrieved from memory 64 and executed by circuitry 60, circuitry 62, one or more ports 54, and/or ports 56. The execution of instructions 66 and/or portions thereof by circuitry 60, circuitry 62, one or more ports 54, and/or ports 56 may result in circuitry 60, circuitry 62, one or more ports 54, and/or ports 56 carrying out the functions and/or operations described herein as being carried out by circuitry 60, circuitry 62, one or more ports 54, and/or ports 56, respectively.

As is described in below, circuitry 60 may be capable of maintaining in, and retrieving from memory 64 forwarding information 68 and/or tables 69. Based at least in upon the forwarding information 68 and/or tables 69, circuitry 60 may be capable of determining, at least in part, the manner in which one or more packets may be forwarded by expander 52. Additionally, as is also described below, circuitry 62 may be capable of performing one or more RAID-related operations that may use, for example, as operands, check data and/or other data (e.g., data from which the check data has been and/or may be generated, at least in part) comprised in one or more packets received by expander 54 from card 20 and/or RAID 29. The check data and/or other data generated as a result, at least in part, of the one or more RAID-related operations, may be comprised in one or more other packets that may be generated and forwarded by expander 52 to RAID 29 or card 20, respectively. As used herein, "check data" means first data generated based at least in part upon second data and from which the second data may be regenerated at least in part. In this embodiment, check data may comprise RAID parity data. Circuitry 62 may comprise, for example, arithmetic circuitry (not shown) that may be capable of performing one or more arithmetic and/or logical operations using and/or involving check data and/or other data from which the check data has been and/or may be generated. These one or more arithmetic and/or logical operations may comprise, for example, logical exclusive-or operations that may generate RAID parity data from initial user data, and/or that may regenerate the initial user data from such RAID parity data.

Alternatively, although not shown in the Figures, one or more portions of forwarding information 68 and/or tables 69 may be stored and/or maintained elsewhere in system 100, such as, for example, in memory 39 and/or memory 21. In this alternative arrangement, circuitry 60 may be capable of providing one or more commands, for example, to card 20 and/or memory 21 that may result in the retrieving of these one or more portion of information 68 and/or tables 69 from memory 39 and/or memory 21 and the providing of these one or more portions of information 68 and/or tables 69 to circuitry 60.

For reasons described below, circuitry 60 and/or circuitry 62 may be capable of determining, in accordance, at least in part with conventional RAID techniques, one or more respective locations in mass storage devices 27 in RAID 29 in which to store and/or from which may be retrieved one or more respective portions of check data and/or user data from which the check data has been generated, at least in part, by circuitry 62, based at least in part upon the user data. For example, if the RAID level implemented in RAID 29 is equal to zero, the check data may be absent from RAID 29, and these locations may be comprise, for example, addresses and/or block locations in devices 27 of one or more stripes (not shown) of user data. If the RAID level implemented in RAID 29 is greater than one, the check data may comprise parity data and these locations may comprise, for example, addresses and/or block locations in devices 27 of one or more stripes (not shown) of such check data and/or user data. Alternatively, if the RAID level implemented in RAID 29 is equal to one (i.e., RAID 29 implements data mirroring), the check data may comprise a copy of the user data and these locations may comprise, for example, addresses and/or block locations of the user data and the redundant copy of the user data in respective mirrored volumes (not shown) in RAID 29.

Although all of the storage devices 27 are shown in Figure 1 as being comprised in RAID 29, without departing from this embodiment, a subset of storage devices 27 may not be comprised in RAID 29.

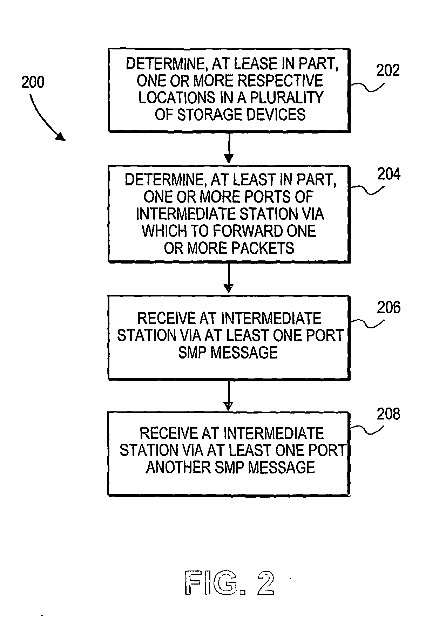

With reference now being made to Figure 2, operations 200 will be described that may be performed in accordance with an embodiment. After, for example, a reset of system 100, card 20 may transmit to intermediate station 40, via one or more media 44B, one or more packets 70 that may comprise one or more requests 72 to store user data 74 comprised in the one or more packets 70 in RAID 29. One or more ports 54 may receive one or more packets 70, and may provide them to circuitry 60.

In response, at least in part, to the receipt by intermediate station 40 of one or more packets 70, circuitry 60 at intermediate station 40 may determine, at least in part, one or more respective locations (e.g., locations 106 and 108) in plurality of storage devices 27 to store one or more respective portions (e.g., portions 107 and 109) of check data and/or other data (e.g., user data) based, at least in part, upon which circuitry 62 at intermediate station 40 may generate, at least in part, the check data, as illustrated by operation 202 in Figure 2. Also in response, at least in part to the receipt by intermediate station 40 of one or more packets 70, circuitry 60 at intermediate station 40 may determine, at least in part, based, at least in part, upon forwarding information 68 stored, at least in part, at the intermediate station, one or more ports comprised in ports 56 via which to forward to storage devices (e.g., storage devices 28B and 28N) in the plurality of storage devices 27 one or more other packets (e.g., packets 88 and 96) that may be generated by circuitry 60, based at least in part upon one or more packets 70, as illustrated by operation 204 in Figure 2. Packets 88 and 96 may comprise respective portions (e.g., stripes) of the check data and/or other data (e.g., user data), collectively or singly referred to by 90 and 98 in Figure 1), to be stored at locations 106 and 108 in storage devices 27. Of course, depending upon the RAID level implemented in RAID 29, the number and respective contents of packets forwarded via ports 56 to storage devices 27, as well as, the number of storage devices to which such packets may be propagated, and the number of portions of check data and/or user data that may be stored in devices 27, may vary, without departing from this embodiment, in order to allow said RAID level to be implemented. As used herein, a "portion" of data may comprise some or all of the data, or a copy of some or all of the data.

In this embodiment, as part of operations 202 and/or 204, circuitry 60 may examine header information, such as, for example, destination addresses, that may be comprised one or more requests 72. Also as part of operations 202 and/or 204, circuitry 60 may correlate this header information with forwarding information 68 to determine which of the ports 56 via which to forward packets 88 and 96, via media 44C and 44N, to storage devices 28B and 28N. For example, in this embodiment, forwarding information 68 may comprise one or more tables (not shown) that may correlate the destination addresses that may be expected to be comprised in header information in one or more requests 72, with locations (e.g., addresses and/or blocks) in each of the storage devices 27 to which to store portions of user data that may be comprised in one or more packets 70 and/or portions of check data that may be generated by circuitry 62, based at least in part upon the user data, in order to permit one or more requests 72 to be satisfied while maintaining RAID 29. These one or more tables comprised in forwarding information 68 may also correlate these locations in storage devices 27 with ports in ports 56 via which the storage devices that comprise these locations may be coupled to expander 52. Additionally, forwarding information 68 may correlate with each of these locations in storage 27 the type of data (e.g., check data, or user data from which the one or more portions of check data may be generated, at least in part) that may be stored at these locations, in order to permit RAID 29 to be maintained and/or implemented.

As part of operations 202 and/or 204, circuitry 62 may generate, based at least in part upon user data 74 and conventional RAID techniques associated with the RAID level implemented by RAID 29, one or more respective portions of user data 74 and/or check data to be stored in storage devices 27 that may satisfy one or more requests 70 while maintaining RAID 29. In this embodiment, as part of operation 202, based at least in part upon forwarding information 68 and the header information comprised in one or more requests 72, circuitry 60 may determine, at least in part, one or more respective locations 106 and 108 in storage devices 27 to store one or more respective portions 90 and 98 in order to satisfy one or more requests 72 while maintaining RAID 29. Also in this embodiment, as part of operation 204, based at least in part upon forwarding information 68 and the header information comprised in one or more requests 72, circuitry 60 may determine, at least in part, ports comprised in ports 56 via which packets 88 and 96 may be forwarded to storage devices 28B and 28N, in order to satisfy one or more requests 72 while maintaining RAID 29.

After executing operations 202 and 204, circuitry 60 may generate packets 88 and 96 such that each of the respective packets 88 and 96 may comprise a respective one of these one or more respective portions of user data 74 and/or check data generated by circuitry 62. For example, in this embodiment, if RAID 29 implements mirroring, one or more packets 88 may comprise user data 90 that may be identical to user data 74, and one or more packets 96 may comprise a copy 98 of user data 90. One or more packets 88 may also comprise addressing information that may address one or more locations 106 determined by circuitry 60 as a result of operation 202. Additionally, one or more packets 96 also may comprise addressing information that may address one or more locations 108 determined by circuitry 60 as a result of operation 202.

In this embodiment, after generating packets 88 and 96, circuitry 60 transmit packets 88 and 96 to the ports comprised in ports 56, determined by circuitry 60 as a result of operation 204, via which packets 88 and 96 may be forwarded to storage devices 28B and 28N in order to satisfy one or more requests 72 and maintain RAID 29. These ports in ports 56 may forward one or more packets 88 to storage device 28B via one or more media 44C, and may forward one or more packets 96 to storage device 28N via one or more media 44N.

After storage device 28B receives one or more packets 88, device 28B may store copy 107 of one or more respective portions 90 at one or more locations 106 addressed by the addressing information in one or more packets 88. Additionally, after storage device 28N receives one or more packets 96, device 28N may store copy 109 of one or more portions 98 at one or more locations 108 addressed by the addressing information in one or more packets 96.

Alternatively or additionally, card 20 may transmit to intermediate station 40 one or more packets (not shown) that may comprise one or more retrieval requests (not shown) to retrieve user data 74 from RAID 29. One or more ports 54 may receive these one or more requests, and may provide them to circuitry 60.

In response, at least in part, to the receipt by intermediate station 40 of these one or more retrieval requests, circuitry 60 may determine (e.g., as a result of operation 202), at least in part, based at least in part upon forwarding information 68 and header information comprised in the one or more packets that comprise the one or more requests, one or more respective locations (e.g., locations 106 and 108) in storage devices 27 from which to retrieve one or more respective portions (e.g., portions 107 and 109) of user data 74, and/or check data generated, at least in part, by circuitry 62 based, at least in part, upon user data 74. Also in response, at least in part, to the receipt by intermediate station 40 of these one or more requests, circuitry 60 at intermediate station 40 may determine, at least in part, based, at least in part, upon forwarding information 68 stored, at least in part, at intermediate station 40 and header information comprised in the one or more packets that comprise the one or more requests, one or more ports comprised in ports 56 via which to forward to one or more of the storage devices 27 one or more additional packets that may be generated by circuitry 60, based at least in part upon the one or more requests. These one or more additional packets may request that storage devices 27 retrieve these one or more respective portions of user data 74, and/or check data that was generated based at least in part upon user data 74, and forward them to intermediate station 40. Of course, depending upon the RAID level implemented in RAID 29, the number of additional packets forwarded via ports 56 to storage devices 27, as well as, the number of storage devices to which such additional packets may be propagated, and the number of portions of check data and/or user data to be retrieved from devices 27, may vary, without departing from this embodiment, in order to allow said RAID level to be implemented.

In this embodiment, as part of operation 202, based at least in part upon forwarding information 68 and the header information comprised in the one or more packets that comprise the one or more retrieval requests, circuitry 60 may transmit these one or more additional packets to one or more of the storage devices 27 via one or more of the ports 56 and media 44C ... 44N. In this embodiment, this may result in storage device 28B retrieving one or more portions 107 from one or more locations 106, and transmitting to intermediate station 40 one or more packets 92 that comprise a copy 94 of one or more portions 107. Alternatively, in this embodiment, this may result in storage device 28N retrieving one or more portions 109 from one or more locations 108, and transmitting to intermediate station 40 one or more packets 102 that comprise a copy 104 of one or more portions 109.

Either the case of either alternative, one or more ports 56 may receive one or more packets 92 or 102, and may transmit them to circuitry 60. One or more packets 92 and 102 may comprise header information that may comprise one or more destination addresses that may indicate that one or more packets 92 and 102 are intended to be received by host system 110 and/or card 20. The one or more tables comprised in forwarding information 68 may correlate these one or more destination addresses with one or more ports 54 that are coupled to card 20. Circuitry 60 may examine forwarding information 68, and as a result of operation 204, may determine, based at least in part upon forwarding information 68, to forward one or more packets 76 to card 20 via the one or more ports 54 that are correlated in forwarding information 68 with these one or more destination addresses. Circuitry 60 may generate one or more packets 76, based at least in part upon packets 92 or 102 previously received by one or more ports 56, such that one or more packets 76 may comprise a copy 80 of the requested data 74 obtained from packets 92 or 102. Circuitry 62 may forward one or more packets 76 to card 20 via one or more ports 54.

Alternatively, depending upon the RAID level implemented in RAID 29, if the copy in storage 27 of user data 74 has become corrupted, one or more packets 92 and 102 retrieved from storage 27 may comprise copies 94 and 104 of check data generated based at least in part upon user data 74 and stored in storage 27. In this alternative, after circuitry 60 receives one or more packets 92 and 102, circuitry 62 may regenerate, at least in part, user data 74, based at least in part upon the copies 94 and 104 of the check data from packets 92 and 102 and conventional RAID techniques associated with the RAID level implemented in RAID 29. Circuitry 60 may examine forwarding information 68, and as a result of operation 204, may determine, based at least in part upon forwarding information 68, to forward one or more packets 76 to card 20 via the one or more ports 54. Circuitry 60 may generate one or more packets 76 such that one or more packets 76 may comprise a copy 80 of the requested data 74 regenerated, at least in part, by circuitry 62 based at least in part upon the copies 94 and 104 of the check data from packets 92 and 102. Circuitry 62 may forward one or more packets 76 to card 20 via one or more ports 54.

Card 20 also may be capable of generating and transmitting to intermediate station 40 a plurality of Serial Management Protocol (SMP) messages (collectively and singly referred to herein by the numeral 82 in Figure 1). For example, one or more of these messages 82 may comprise header information 84 and one or more requests 86 to modify one or more operational parameters of RAID 29, such as, for example, partitioning of RAID 29 into a plurality of redundant arrays of independent disks, collapsing a plurality of such arrays into a single RAID, changing assignment of storage devices to such arrays, changing one or more RAID levels implemented by such arrays, etc. In this embodiment, one more messages may comprise, for example, one or more SMP_REQUEST messages, and one or more requests 86 may be indicated by one or more values in one or more special fields in one or more messages 82. These one or more special fields may be chosen by a vendor and/or maker of intermediate station 40 so as to be, for example, uniquely associated with SMP messages intended to be received by one or more SAS expanders vended and/or made by such vendor and/or maker, while allowing such SMP messages to be compatible and/or in compliance with the SAS Standard.

At least one of one or more ports 54 may receive these one or more messages 82, as illustrated by operation 206 in Figure 2. In response, at least in part, to receipt of one or more messages 82, one or more ports 52 may transmit one or more messages 82 to circuitry 60. This may result in circuitry 60 generating and issuing to RAID 29 one or more packets (not shown) that may result in RAID 29 modifying, in accordance with conventional RAID techniques, the one or more operating parameters of RAID 29 so as to carry out the modification to these one or more operating parameters requested in one more requests 86. Circuitry 60 may also modify forwarding information 68 and/or tables 69 so as to cause them to comport with the one or more modified operating parameters of RAID 29.

Alternatively or additionally, one or more others of these messages 82 may comprise header information 84 and one or more requests 86 to modify forwarding information 68 and/or tables 69. At least one of one or more ports 54 may receive these one or more messages 82, as illustrated by operation 208 in Figure 2. In response, at least in part, to receipt of one or more messages 82, one or more ports 52 may transmit one or more messages 82 to circuitry 60. This may result in circuitry 60 modifying forwarding information 68 and/or tables 69 so as to cause them to comport with the one or more requests 86.

Thus, one system embodiment comprises circuitry to determine, at least in part, at an intermediate station one or more respective locations in a plurality of storage devices of one or more respective portions of check data and/or other data (e.g., user data). In this system embodiment, the check data may be generated, at least in part, at the intermediate station based at least in part upon the other data. The circuitry also may be capable of determining, at least in part, at the intermediate station, based at least in part upon forwarding information stored at least in part at the intermediate station, one or more ports of the intermediate station via which to forward one or more packets. The one or more packets may be generated at the intermediate station based at least in part upon one or more other packets previously received via one or more other ports of the intermediate station. The one or more other packets may comprise the check data and/or other data. The circuit card may be communicatively coupled to the intermediate station via a communication medium.

Advantageously, the intermediate station comprised in this system embodiment may perform some or all of the RAID-related operations that, in the prior art, may have been performed by a host processor and/or HBA. Advantageously, this may reduce the amounts host processor and/or HBA processing resources used to carry out such operations in this system embodiment, compared to the prior art. Further advantageously, the intermediate station of this system embodiment also may provide a relatively easy and transparent (from the standpoint of the host system) way in which to add RAID functionality to a storage network having storage devices, especially if such storage devices are capable of communicating using SAS and/or S-ATA protocol.

The terms and expressions which have been employed herein are used as terms of description and not of limitation, and there is no intention, in the use of such terms and expressions, of excluding any equivalents of the features shown and described (or portions thereof), and it is recognized that various modifications are possible within the scope of the claims.

For example, instead of or in addition to comprising expander 52, intermediate station 40 may comprise a port multiplier that complies and/or is compatible with an S-ATA protocol. Host system 110 may be capable of providing one or more commands (e.g., one or more commands specific to and/or associated with a vendor and/or maker of the port multiplier) that may permit forwarding and/or routing tables and/or management information to be stored and/or modified in the port multiplier. By so storing and/or modifying such tables and/or information, host system 110 may manage and/or control operation of the port multiplier.

Additionally or alternatively, expander 52 may be capable of detecting when a configuration change occurs in devices 27, and when expander 52 detects the occurrence of such a configuration change, expander 52 may provide one or more messages to host computer system 110 that may indicate the occurrence and nature of the change. Examples of the types of configuration changes that may be detectable by expander 52 may include changes in the configuration of RAID 29, such as failure and/or removal of one or more of mass storage devices 28B ... 28N, and/or coupling of one or more other and/or additional mass storage devices (not shown) into RAID 29 (e.g., in a "hot plug" of one or more mass storage devices into RAID 29).

Additional modifications are also possible. Accordingly, the claims are intended to cover all such equivalents.

## Claims

1. A system (100) comprising an intermediate station (40) to establish data communications between a host (110) and a plurality of storage devices (27), the intermediate station (40) independent of the host (110) and the plurality of storage devices (27), the system **characterized in that** the intermediate station (40) comprises:
a forwarding/routing table (69) at the intermediate station (40) that correlates data addresses to a first plurality of ports (56) and a second plurality of ports (54) connected with the intermediate station (40), the first plurality of ports (56) to correspond with the plurality of storage devices (27), and the second plurality of ports (54) to correspond with the host (110);
means for receiving one or more packets (70, 92, 102) from the host (110) and the storage devices (27) at the intermediate station (40), the packets (70, 92, 102) comprising user data and data addresses;
means for generating a first user data portion and a second user data portion based at least in part on the user data of the one or more packets (70) received from the host (110) and for generating one or more other packets (76) based at least in part on the received packets (92, 102) received from the storage devices 927);
means for selecting a plurality of ports (56) from the first plurality of ports (56) to which the first and second user data portions are to be forwarded and for selecting one or more ports (54) from the second plurality of ports (54) to which the other packets (76) are to be forwarded, based at least in part on the data addresses and further based on the forwarding/routing table (69); and
means for forwarding the first and second user data portions to the selected ports (56) from the first plurality or ports (56) and for forwarding the other packets (76) to the selected ports (54) from the second plurality of ports (54).

2. The system (100) of claim 1, wherein the intermediate station (40) further comprises a Serial Attached Small Computer Systems Interface, SAS, expander (52).

3. The system (100) of claim 1, wherein the plurality of storage devices (27) comprises a redundant array of independent disks, RAID (29)the plurality of ports (56) comprises ports (56) coupled to the RAID (29).

4. The system (100) of claim 1, wherein the intermediate station (40) further comprises means for receiving via the at least one port (54) a Serial Management Protocol (SMP) message (82) that comprises one or more requests (86) to modify an operational parameter of the RAID (29).

5. The system (100) of claim 4, wherein the intermediate station (40) further comprises means for receiving via the at least one port (54) another SMP message (82) that comprises one or more other requests (86) to modify the forwarding/routing table (69).

6. The system (100) of claim 1, wherein the forwarding/routing table (69) comprises forwarding information (68).

7. The system (100) of claim 1, wherein:
the means for generating is further operable to generate check data based at least in part on the user data; and
the means for forwarding is further operable to forward the check data to at least one of the selected ports (56) based at least in part on the forwarding/routing table (69).

8. A method for use in an intermediate station (40) that provides data communications between a host (110) and a plurality of storage devices (27), the intermediate station (40) independent of the host (110) and the plurality of storage devices (27), the method comprising:
maintaining a forwarding/routing table (69) at the intermediate station (40) that correlates data addresses to a first plurality of ports (56) and a second plurality of ports (54) connected with the intermediate station (40), the first plurality of ports (56) corresponding with the plurality of storage devices (27), and the second plurality of ports (54) corresponding with the host (110);
receiving one or more packets (70, 92, 102) from the host (110) and the storage devices (27) at the intermediate station (40), the packets (70, 92, 102) comprising user data and data addresses;
for packets (70) received from the host (110):
generating a first user data portion and a second user data portion based at least in part on the user data;
selecting a plurality of ports (56) from the first plurality of ports (56) to which the first and second user data portions are to be forwarded, based at least in part on the data addresses and further based on the forwarding/routing table (69); and
forwarding the first and second user data portions to the selected ports (56) from the first plurality of ports (56); and
for packets (92, 102) received from the storage devices (27):
generating one or more other packets (76) based at least in part on the received packets (92, 102);
selecting one or more ports (54) from the second plurality of ports (54) to which the other packets (76) are to be forwarded, based at least in part on the data addresses and further based on the forwarding/routing table (69); and
forwarding the other packets (76) to the selected ports (54) from the second plurality of ports (54).

9. The method of claim 8, wherein the intermediate station (40) comprises a Serial Attached Small Computer Systems Interface, SAS, expander (52).

10. The method of claim 8, wherein the plurality of storage devices (27) comprises:
a redundant array of independent disks, RAID (29); and
the plurality of ports (56) comprises ports coupled to the RAID (29).

11. The method of claim 8, further comprising receiving at the intermediate station (40) via the at least one port (54) a Serial Management Protocol, SMP, message (82) that comprises one or more requests (86) to modify an operational parameter of the RAID (29).

12. The method of claim 11, further comprising receiving at the intermediate station (40) via the at least one port another SMP message (82) that comprises one or more other requests (86) to modify the forwarding/routing table (69).

13. The method of claim 8, wherein the forwarding/routing table comprises forwarding information (68).

14. The method of claim 8, further comprising:
generating generate check data based at least in part on the user data; and
forwarding the check data to at least one of the selected ports (56) based at least in part on the forwarding/routing table (69).

15. An article comprising:
a storage medium having stored thereon instructions that when executed by a machine result in the performance of the steps of the method of any of claims 8 to 14.

## Patentansprüche

1. System (100), welches eine Zwischenstation (40) umfasst, um eine Datenkommunikation zwischen einem Host (110) und mehreren Speichervorrichtungen (27) einzurichten, wobei die Zwischenstation (40) von dem Host (110) und den mehreren Speichervorrichtungen (27) unabhängig ist, das System **dadurch gekennzeichnet, dass** die Zwischenstation (40) Folgendes umfasst:
eine Weiterleitungs-/Leitwegtabelle (69) an der Zwischenstation (40), welche Datenadressen mit einer ersten Vielzahl von Ports (56) und mit einer zweiten Vielzahl von Ports (54) korreliert, welche mit der Zwischenstation (40) verbunden sind, wobei die erste Vielzahl von Ports (56) den mehreren Speichervorrichtungen (27) entsprechen sollen und die zweite Vielzahl von Ports (54) dem Host (110) entsprechen sollen;
Mittel zum Empfangen eines oder mehrerer Pakete (70, 92, 102) von dem Host (110) und den Speichervorrichtungen (27) an der Zwischenstation (40), wobei die Pakete (70, 92, 102) Benutzerdaten und Datenadressen umfassen;
Mittel zum Erzeugen eines ersten Benutzerdatenabschnitts und eines zweiten Benutzerdatenabschnitts, welche zumindest teilweise auf den Benutzerdaten des einen oder der mehreren Pakete (70) basieren, welche von dem Host (110) empfangen werden, und zum Erzeugen eines oder mehrerer anderer Pakete (76), welche zumindest teilweise auf den empfangenen Paketen (92, 102) basieren, welche von den Speichervorrichtungen (92) empfangen werden;
Mittel zum Auswählen mehrerer Ports (56) aus der ersten Vielzahl von Ports (56), an welche die ersten und die zweiten Benutzerdatenabschnitte weitergeleitet werden sollen, und zum Auswählen eines oder mehrerer Ports (54) aus der zweiten Vielzahl von Ports (54), an welche die anderen Pakete (76) weitergeleitet werden sollen, zumindest teilweise auf der Grundlage von den Datenadressen und weiterhin auf der Grundlage der Weiterleitungs-/Leitwegtabelle (69); und
Mittel zum Weiterleiten der ersten und der zweiten Benutzerdatenabschnitte an die ausgewählten Ports (56) von der ersten Vielzahl von Ports (56) und zum Weiterleiten der anderen Pakete (76) an die ausgewählten Ports (54) von der zweiten Vielzahl von Ports (54).

2. System (100) nach Anspruch 1, wobei die Zwischenstation (40) weiterhin einen SAS-(Serial Attached Small Computer Systems Interface)-Expander (52) umfasst.

3. System (100) nach Anspruch 1, wobei die mehreren Speichervorrichtungen (27) eine RAID (Redundant Array of Independent Disks) (29) umfassen, wobei die Vielzahl von Ports (56) Ports (56) umfassen, welche mit der RAID (29) verbunden sind.

4. System (100) nach Anspruch 1, wobei die Zwischenstation (40) weiterhin Mittel zum Empfangen einer SMP-(Serial Management Protocol)-Meldung (82) über den mindestens einen Port (54) umfasst, welche eine oder mehrere Anforderungen (86) umfasst, einen Betriebsparameter der RAID (29) zu modifizieren.

5. System (100) nach Anspruch 4, wobei die Zwischenstation (40) weiterhin Mittel zum Empfangen einer anderen SMP-Meldung (82) über den mindestens einen Port (54) umfasst, welche eine oder mehrere andere Anforderungen (86) umfasst, die Weiterleitungs-/Leitwegtabelle (69) zu modifizieren.

6. System (100) nach Anspruch 1, wobei die Weiterleitungs-/Leitwegtabelle (69) Weiterleitungsinformationen (68) umfasst.

7. System (100) nach Anspruch 1, wobei:
das Mittel zum Erzeugen weiterhin funktionsfähig ist, Prüfdaten zu erzeugen, welche zumindest teilweise auf den Benutzerdaten basieren; und
das Mittel zum Weiterleiten weiterhin funktionsfähig ist, die Prüfdaten an mindestens einen der ausgewählten Ports (56) weiterzuleiten, welcher zumindest teilweise auf der Weiterleitungs-/Leitwegtabelle (69) basiert.

8. Verfahren zur Verwendung in einer Zwischenstation (40), welche eine Datenkommunikation zwischen einem Host (110) und mehreren Speichervorrichtungen (27) bereitstellt, wobei die Zwischenstation (40) von dem Host (110) und den mehreren Speichervorrichtungen (27) unabhängig ist, das Verfahren Folgendes umfassend:
Unterhalten einer Weiterleitungs-/Leitwegtabelle (69) an der Zwischenstation (40), welche Datenadressen mit einer ersten Vielzahl von Ports (56) und mit einer zweiten Vielzahl von Ports (54) korreliert, welche mit der Zwischenstation (40) verbunden sind, wobei die erste Vielzahl von Ports (56) den mehreren Speichervorrichtungen (27) entsprechen und die zweite Vielzahl von Ports (54) dem Host (110) entsprechen;
Empfangen eines oder mehrerer Pakete (70, 92, 102) von dem Host (110) und den Speichervorrichtungen (27) an der Zwischenstation (40), wobei die Pakete (70, 92, 102) Benutzerdaten und Datenadressen umfassen;
für Pakete (70), welche von dem Host (110) empfangen werden:
Erzeugen eines ersten Benutzerdatenabschnitts und eines zweiten Benutzerdatenabschnitts, welche zumindest teilweise auf den Benutzerdaten basieren;
Auswählen mehrere Ports (56) aus der ersten Vielzahl von Ports (56), an welche die ersten und die zweiten Benutzerdatenabschnitte weitergeleitet werden sollen, zumindest teilweise auf der Grundlage der Datenadressen und weiterhin auf der Grundlage der Weiterleitungs-/Leitwegtabelle (69); und
Weiterleiten der ersten und der zweiten Benutzerdatenabschnitte an die ausgewählten Ports (56) aus der ersten Vielzahl von Ports (56);
und für Pakete (92, 102), welche von den Speichervorrichtungen (27) empfangen werden:
Erzeugen eines oder mehrerer anderer Pakete (76), welche zumindest teilweise auf den empfangenen Paketen (92, 102) basieren;
Auswählen eines oder mehrerer Ports (54) aus der zweiten Vielzahl von Ports (54), an welche die anderen Pakete (76) weitergeleitet werden sollen, zumindest teilweise auf der Grundlage der Datenadressen und weiterhin auf der Grundlage der Weiterleitungs-/Leitwegtabelle (69); und
Weiterleiten der anderen Pakete (76) an die ausgewählten Ports (54) aus der zweiten Vielzahl von Ports (54).

9. Verfahren nach Anspruch 8, wobei die Zwischenstation (40) einen SAS-(Serial Attached Small Computer Systems Interface)-Expander (52) umfasst.

10. Verfahren nach Anspruch 8, wobei die mehreren Speichervorrichtungen (27) Folgendes umfassen:
eine RAID (Redundant Array of Independent Disks) (29); und
die Vielzahl von Ports (56), welche Ports umfassen, welche mit der RAID (29) verbunden sind.

11. Verfahren nach Anspruch 8, weiterhin umfassend Empfangen an der Zwischenstation (40) über den mindestens einen Port (54) einer SMP-(Serial Management Protocol)-Meldung (82), welche eine oder mehrere Anforderungen (86) umfasst, einen Betriebsparameter der RAID (29) zu modifizieren.

12. Verfahren nach Anspruch 11, weiterhin Empfangen an der Zwischenstation (40) über den mindestens einen Port (54) einer anderen SMP-Meldung (82), welche eine oder mehrere andere Anforderungen (86) umfasst, die Weiterleitungs-/Leitwegtabelle (69) zu modifizieren.

13. Verfahren nach Anspruch 8, wobei die Weiterleitungs-/Leitwegtabelle Weiterleitungsinformationen (68) umfasst.

14. Verfahren nach Anspruch 8, weiterhin Folgendes umfassend:
Erzeugen von Prüfdaten, welche zumindest teilweise auf den Benutzerdaten basieren; und
Weiterleiten der Prüfdaten an mindestens einen der ausgewählten Ports (56), welche zumindest teilweise auf der Weiterleitungs-/Leitwegtabelle (69) basieren.

15. Gegenstand, Folgendes umfassend:
ein Speichermedium mit darauf gespeicherten Anweisungen, welche beim Ausführen durch eine Maschine zu der Durchführung der Verfahrensschritte nach einem der Ansprüche 8 bis 14 führen.

## Revendications

1. Système (100) comprenant une station intermédiaire (40) pour établir des communications de données entre un dispositif hôte (110) et une pluralité de dispositifs de mémoire (27), la station intermédiaire (40) indépendante du dispositif hôte (110) et de la pluralité de dispositifs de mémoire (27), le système étant **caractérisé en ce que** la station intermédiaire (40) comprend :
une table d'envoi/routage (69) à la station intermédiaire (40) qui effectue la corrélation des adresses de données avec une première pluralité de ports (56) et une seconde pluralité de ports (54) connectés à la station intermédiaire (40), la première pluralité de ports (56) correspondant à la pluralité de dispositifs de mémoire (27) et la seconde pluralité de ports (54) correspondant au dispositif hôte (110) ;
des moyens pour recevoir un ou plusieurs paquets (70, 92, 102) en provenance du dispositif hôte (110) et des dispositifs de mémoire (27) à la station intermédiaire (40), les paquets (70, 92, 102) comprenant des données d'utilisateur et des adresses de données ;
des moyens pour générer une première portion de données d'utilisateur et une seconde portion de données d'utilisateur basée au moins en partie sur les données d'utilisateur de l'un ou de plusieurs paquets (70) reçus en provenance du dispositif hôte (110) et pour générer un ou plusieurs autres paquets (76) basés au moins en partie sur les paquets reçus (92, 102), reçus à partir des dispositifs de mémoire (27) ;
des moyens pour sélectionner une pluralité de ports (56) parmi la première pluralité de ports (56) à laquelle les première et seconde portions de données d'utilisateur doivent être envoyées et pour sélectionner un ou plusieurs ports (76) parmi la seconde pluralité de ports (54) à laquelle les autres paquets (76) doivent être envoyés, basés au moins en partie sur les adresses de données et, de plus, basés sur la table d'envoi/routage (69) ; et
des moyens pour envoyer les première et seconde portions de données d'utilisateur à destination des ports sélectionnés (56) parmi la première pluralité de ports (56) et pour envoyer les autres paquets (76) à destination des ports sélectionnés (54) parmi la seconde pluralité de ports (54).

2. Système (100) selon la revendication 1, dans lequel la station intermédiaire (40) comprend de plus un extenseur (52) de « Serial Attached Small Computer Systems Interface, SAS ».

3. Système (100) selon la revendication 1, dans lequel la pluralité de dispositifs de mémoire (27) comprend un réseau redondant de disques indépendants, RAID (29), dont la pluralité de ports (56) comprend des ports (56) couplés au RAID (29).

4. Système (100) selon la revendication 1, dans lequel la station intermédiaire (40) comprend de plus des moyens pour recevoir, via le au moins un port (54), un message Serial Management Protocol (SMP) (82) qui comprend une ou plusieurs demandes (86) pour modifier un paramètre opérationnel du RAID (29).

5. Système (100) selon la revendication 4, dans lequel la station intermédiaire (40) comprend de plus des moyens pour recevoir, par le biais d'au moins un port (54), un autre message SMP (82) qui comprend une ou plusieurs autres demandes (86) pour modifier la table d'envoi/routage (69).

6. Système (100) selon la revendication 1, dans lequel la table d'envoi/routage (69) comprend des informations d'envoi (68).

7. Système (100) selon la revendication 1, dans lequel :
les moyens pour générer sont, de plus, opérants pour générer des données de vérification basées au moins en partie sur les données d'utilisateur ; et
les moyens pour l'envoi sont, de plus, opérants pour envoyer les données de vérification à au moins l'un des ports sélectionnés (56) basés au moins en partie sur la table d'envoi/routage (69).

8. Procédé pour l'utilisation dans une station intermédiaire (40) qui assure les communications de données entre un dispositif hôte (110) et une pluralité de dispositifs de mémoire (27), la station intermédiaire (40) indépendante du dispositif hôte (110) et de la pluralité de dispositifs de mémoire (27), le procédé comprenant :
le maintien d'une table d'envoi/routage (69) à la station intermédiaire (40) qui effectue la corrélation des adresses de données à une première pluralité de ports (56) et à une seconde pluralité de ports (54) connectés par la station intermédiaire (40), la première pluralité de ports (56) correspondant à la pluralité de dispositifs de mémoire (27), et la seconde pluralité de ports (54) correspondant au dispositif hôte (110) ;
la réception d'un ou plusieurs paquets (70, 92, 102) en provenance du dispositif hôte (110) et des dispositifs de mémoire (27) à la station intermédiaire (40), les paquets (70, 92, 102) comprenant des données d'utilisateur et des adresses de données ;
pour les paquets (70) reçus en provenance du dispositif hôte (110) :
génération d'une première portion de données d'utilisateur et d'une seconde portion de données d'utilisateur basées au moins en partie sur les données d'utilisateur ;
sélection d'une pluralité de ports (56) parmi la première pluralité de ports (56) à laquelle les première et seconde portions de données d'utilisateur doivent être envoyées, basés au moins en partie sur les adresses de données et basés de plus sur la table d'envoi/routage (69) ; et
envoi des première et seconde portions de données d'utilisateur à destination des ports sélectionnés (56) parmi la première pluralité de ports (56) ;
et
pour les paquets (92, 102) reçus en provenance des dispositifs de mémoire (27) :
génération d'un ou de plusieurs autres paquets (76) basés au moins en partie sur les paquets reçus (92, 102) ;
sélection d'un ou plusieurs ports (54) parmi la seconde pluralité de ports (54) à laquelle les autres paquets (76) doivent être envoyés, rapportés au moins en partie sur les adresses de données et basés de plus sur la table d'envoi/routage (69) ; et
envoi des autres paquets (76) vers les ports sélectionnés (54) parmi la seconde pluralité de ports (54).

9. Procédé selon la revendication 9, dans lequel la station intermédiaire (40) comprend un extenseur (52) de Serial Attached Small Computer Systems Interface, SAS.

10. Procédé selon la revendication 8, dans lequel la pluralité de dispositifs de mémoire (27) comprend :
un réseau redondant de disques indépendants, RAID (29) ; et
la pluralité de ports (56) comprend des ports couplés au RAID (29).

11. Procédé selon la revendication 8, comprenant de plus la réception à la station intermédiaire (40), par le biais du au moins un port (54), d'un message SMP, Serial Management Protocol (82), qui comprend une ou plusieurs demandes (86) pour modifier un paramètre opérationnel du RAID (29).

12. Procédé selon la revendication 11, comprenant de plus la réception au niveau de la station intermédiaire (40), par le biais du au moins un port (54), d'un autre message SMP (82) qui comprend une ou plusieurs autres demandes (86) pour modifier la table d'envoi/routage (69).

13. Procédé selon la revendication 8, dans lequel la table d'envoi/routage comprend des informations d'envoi (68).

14. Procédé selon la revendication 8, comprenant de plus :
la génération de données de vérification de génération basées au moins en partie sur les données d'utilisateur ; et
envoi des données de vérification à au moins l'un des ports sélectionnés (56) basés au moins en partie sur la table d'envoi/routage (69).

15. Article comprenant :
un support de mémoire comportant dans celui-ci des instructions mémorisées qui, lorsqu'elles sont exécutées par une machine, se traduisent par l'accomplissement des étapes du procédé de l'une quelconque des revendications 8 à 14.
